# EUROPEAN PATENT APPLICATION

(11) **EP 3 026 859 A1**
(43) Date of publication of application: **01.06.2016**
(21) Application number: 13881228.4
(22) Date of filing: 20.08.2013
(51) Int. Cl.: H04L 29/06

(54) **VERIFICATION CODE PROCESSING METHOD, DEVICE, TERMINAL AND SERVER**

(30) Priority: 26.07.2013 CN 201310320271
(71) Applicant: ZTE Corporation, Shenzhen, Guangdong 518057 (CN)
(72) Inventor: ZHOU, Yushen, Shenzhen Guangdong 518057 (CN)
(74) Representative: Brunazzi, Stefano
(86) International application number: PCT/CN2013/081849
(87) International publication number: WO 2014/161259

(57) **Abstract**

Provided are a CAPTCHA processing method and device, a terminal and a server. The method includes that: a CAPTCHA is received, wherein the CAPTCHA indicates a physical operation generated according to configuration information of a terminal; the physical operation corresponding to the CAPTCHA is executed; and an execution result of the physical operation is sent to a server. By the disclosure, the problem that CAPTCHAs are either less in verification function or complex in format and easy to crack by the program, and are poor in user experience and low in security in the related technology is solved, and effects of prevention of cracking with the program, high security and great improvement in user experiences are further achieved.

## Description

### Technical Field

The disclosure relates to the field of communication, and in particular to a CAPTCHA processing method and device, a terminal and a server.

### Background

A CAPTCHA "Completely Automated Public Turing test to tell Computers and Human Apart" is a completely automated public program which tells whether a user is a computer or a human. Malicious password cracking, repeated voting and forum boasting may be prevented, a certain hacker may be effectively prevented from implementing brute force cracking on a certain specific registered user with a specific program to continuously try login, and adoption of a CAPTCHA is actually an access manner for many websites now (for example, personal online bank of the China Merchants Bank and Baidu community).

Till now, a CAPTCHA may have many forms, for example:
1: four numbers and letters are adopted, which may all be letters and may also all be numbers and a random 4-bit character string, such a CAPTCHA is the most original CAPTCHA, and its verification function may be neglected.
2: A Graphics Interchange Format (GIF) is adopted for a user to log in a Chinese Software Develop Net (CSDN) website, and random number picture CAPTCHAs are commonly used at present. Characters on pictures are fairly standard, and a verification function of such a CAPTCHA is better than that of the previous one. It is impossible for people without basic knowledge of graphics to recognize such CAPTCHAs. However, a program capable of reading such CAPTCHAs was published in a forum on the first day the CSDN used them.
3: Chinese characters are latest CAPTCHAs for registration at present, are randomly generated, and are more difficult to enter. For example, a complaint page of QQ.
4: A Bitmap (BMP) format is adopted for application for a hotmail of MicroSoft (MS), including random number+random capital English letter+random interference pixel+random position.
5: Korean or Japanese is adopted, and for example, Korean is required during MS registration on Popkart HF, which increases difficulty and requires a user to study Korean.
6: A Joint Photographic Experts Group (JPEG, or called JPG) format is adopted for Gmail registration of Google, including random English letter+random color+random position+random length.
7: An X-Bitmap (XBM) format is adopted for each other major forum, including random contents.
8: An advertisement CAPTCHA is adopted: part of contents in an advertisement are required to be input, and a characteristic is that additional income may be created for a website, and users may find everything fresh and new.
9: A question CAPTCHA is adopted: the question CAPTCHA is mainly filled in an asking and answering form.
10: A phone CAPTCHA may ensure shopping safety more accurately and safely and verify correctness of a user, and is the most effective CAPTCHA system.
11: A video CAPTCHA is adopted: the video CAPTCHA is a new CAPTCHA in CAPTCHAs, a CAPTCHA combined by random numbers, letters and Chinese in the video CAPTCHA is dynamically embedded into a video in a format of Moving Picture Experts Group Audio Layer-4 (MP4), Flash Video (FLV) and the like, which increases cracking difficulty. The video CAPTCHA is dynamically transformed and randomly responds, so that attack behaviours such as dictionary attacks and exhaustive attacks may be effectively prevented.

There are many types of CAPTCHAs, and moreover, in nowadays entering the mobile Internet era, many terminal users may use and log in various kinds of service of various websites on terminals (for example, mobile phones), so that it is more important to prevent cracking or attacking of others on the terminals. However, the CAPTCHAs in a related technology are either less in verification function or complex in format and easy to crack by a program, and are poor in user experience and low in security.

Therefore, there exists the problem that CAPTCHAs are either less in verification function or complex in format and easy to crack by a program, and are poor in user experience and low in security in the related technology.

### Summary

The disclosure provides a CAPTCHA processing method and device, a terminal and a server, so as to at least solve the problem that CAPTCHAs are either less in verification function or complex in format and easy to crack by a program, and are poor in user experience and low in security in the related technology.

According to one aspect of the disclosure, a CAPTCHA processing method is provided, which may include that: a CAPTCHA is received, wherein the CAPTCHA indicates a physical operation generated according to configuration information of a terminal; the physical operation corresponding to the CAPTCHA is executed; and an execution result of the physical operation is sent to a server.

Preferably, the configuration information may include at least one of: whether the terminal has a light sensor or not, whether the terminal has an acceleration sensor or not, whether the terminal has a magnetic sensor or not, whether the terminal has a direction sensor or not, whether the terminal has a gyroscope sensor or not, whether the terminal has a proximity sensor or not, whether the terminal supports a touch screen or not, whether the touch screen of the terminal is a capacitive touch screen or not, the number of touch points of the capacitive touch screen of the terminal and an application program supported by the terminal.

Preferably, the physical operation may include at least one of: changing intensity of light received by the terminal, changing a movement speed of the terminal, rotating a direction of the terminal, changing a magnitude of a magnetic field around the terminal, changing stability of the terminal, changing a distance away from the terminal, changing the number of points at which the touch screen of the terminal is simultaneously touched and starting a preset application program according to a preset condition.

According to another aspect of the disclosure, a CAPTCHA processing method is provided, which may include that: configuration information of a terminal is acquired; a CAPTCHA is generated according to the configuration information, wherein the CAPTCHA indicates one or more physical operations; and verification processing is performed according to the physical operation of the CAPTCHA.

Preferably, the block that the CAPTCHA is generated according to the configuration information may include that: hardware configured to generate the CAPTCHA is determined according to the configuration information; and the physical operation corresponding to the CAPTCHA is generated according to the selected hardware and a preset algorithm.

Preferably, the configuration information may include at least one of: whether the terminal has a light sensor or not, whether the terminal has an acceleration sensor or not, whether the terminal has a magnetic sensor or not, whether the terminal has a direction sensor or not, whether the terminal has a gyroscope sensor or not, whether the terminal has a proximity sensor or not, whether the terminal supports a touch screen or not, whether the touch screen of the terminal is a capacitive touch screen or not, the number of touch points of the capacitive touch screen of the terminal and an application program supported by the terminal.

Preferably, the physical operation may include at least one of: changing intensity of light received by the terminal, changing a movement speed of the terminal, rotating a direction of the terminal, changing a magnitude of a magnetic field around the terminal, changing stability of the terminal, changing a distance away from the terminal, changing the number of points at which the touch screen of the terminal is simultaneously touched and starting a preset application program according to a preset condition.

According to another aspect of the disclosure, a CAPTCHA processing device is provided, which may include: a receiving component, configured to receive a CAPTCHA, wherein the CAPTCHA is a physical operation generated according to configuration information of a terminal; an execution component, configured to execute the physical operation corresponding to the CAPTCHA; and a sending component, configured to send an execution result of the physical operation to a server.

According to another aspect of the disclosure, a terminal is provided, which may include the abovementioned device.

According to another aspect of the disclosure, a CAPTCHA processing device is provided, which may include: an acquisition component, configured to acquire configuration information of a terminal; a generation component, configured to generate a CAPTCHA according to the configuration information, wherein the CAPTCHA indicates one or more physical operations; and a processing component, configured to perform verification processing according to the physical operation of the CAPTCHA.

Preferably, the generation component may include: a determination element, configured to determine hardware configured to generate the CAPTCHA according to the configuration information; and a generation element, configured to generate the physical operation corresponding to the CAPTCHA according to the selected hardware and a preset algorithm.

According to another aspect of the disclosure, a server is provided, which may include the device described in any item.

According to the disclosure, the CAPTCHA is received, wherein the CAPTCHA is the physical operation generated according to the configuration information of the terminal; the physical operation corresponding to the CAPTCHA is executed; and the execution result of the physical operation is sent to the server, so that the problem that the CAPTCHAs are either less in verification function or complex in format and easy to crack by the program, and are poor in user experience and low in security in the related technology is solved, and effects of prevention of cracking with the program, high security and great improvement in user experiences are further achieved.

### Brief Description of the Drawings

The drawings described here are adopted to provide further understanding of the disclosure, and form a part of the disclosure. Schematic embodiments of the disclosure and description thereof are adopted to explain the disclosure and not intended to form improper limits to the disclosure. In the drawings:
Fig. 1 is a first flowchart of a CAPTCHA processing method according to an embodiment of the disclosure;
Fig. 2 is a second flowchart of a CAPTCHA processing method according to an embodiment of the disclosure;
Fig. 3 is a structure diagram of a first CAPTCHA processing device according to an embodiment of the disclosure;
Fig. 4 is a structure diagram of a terminal according to an embodiment of the disclosure;
Fig. 5 is a structure diagram of a second CAPTCHA processing device according to an embodiment of the disclosure;
Fig. 6 is a preferred structure diagram of a generation component 54 in a second CAPTCHA processing device according to an embodiment of the disclosure;
Fig. 7 is a structure diagram of a server according to an embodiment of the disclosure; and
Fig. 8 is a flowchart of CAPTCHA processing implemented by a physical operation according to a first preferred embodiment of the disclosure.

### Detailed Description of the Embodiments

The disclosure is described below with reference to the drawings and embodiments in detail. It is important to note that the embodiments in the disclosure and characteristics in the embodiments can be combined under the condition of no conflicts.

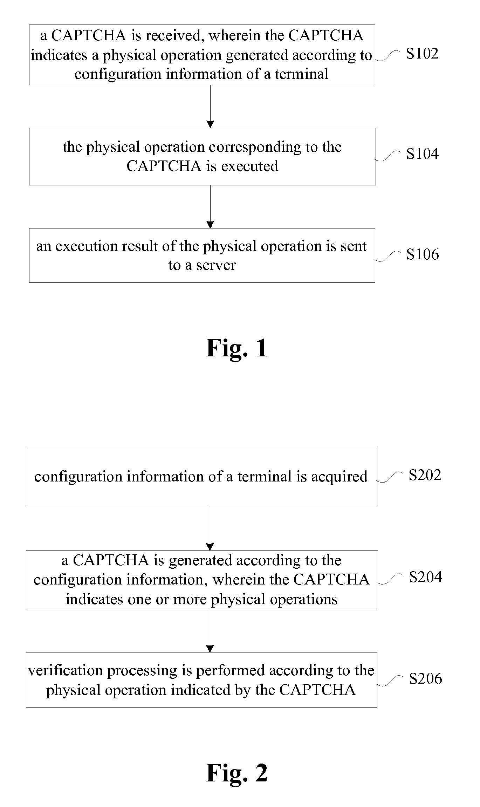

The embodiment provides a CAPTCHA processing method. Fig. 1 is a first flowchart of a CAPTCHA processing method according to an embodiment of the disclosure. As shown in Fig. 1, the method includes the follows:
in block S102: a CAPTCHA is received, wherein the CAPTCHA indicates a physical operation generated according to configuration information of a terminal;
in block S104: the physical operation corresponding to the CAPTCHA is executed; and
in block S106: an execution result of the physical operation is sent to a server.

By the abovementioned blocks, the physical operation serving as the CAPTCHA is generated according to the configuration information of the terminal, then verification processing is performed by adopting the physical operation, that is, the physical operation corresponding to the CAPTCHA is executed, and an execution result of the physical operation is sent to the server; and compared with the related art where a CAPTCHA may be recognized only through a software program to cause high CAPTCHA cracking rate and insecurity, adoption of the physical operation generated according to the configuration information of the terminal as the CAPTCHA may prevent the CAPTCHA from being recognized by any program, so that the problems of high CAPTCHA cracking rate and insecurity in the related art are solved, and effects of prevention of cracking with the program, high security and great improvement in user experiences are further achieved.

When verification processing is performed according to the physical operation indicated by the CAPTCHA, a terminal user performs input according to the physical operation indicated by the CAPTCHA, and then the terminal detects the physical operation indicated by the CAPTCHA; meanwhile, an execution condition of the physical operation is monitored, that is, the execution result of the physical operation is recorded; and then the execution result of the physical operation is sent to the server, wherein the server performs verification processing on the terminal according to the execution result, that is, the server judges whether the physical operation detected by the terminal is corresponding to a physical operation indicated by the server; the server determines that the terminal passes verification under the condition that a judgment result indicates that the physical operation detected by the terminal corresponds the physical operation indicated by the server, otherwise determines that the terminal does not pass verification.

It is important to note that the configuration information may include various kinds of information, and for example, may include at least one of: whether the terminal has a light sensor or not, whether the terminal has an acceleration sensor or not, whether the terminal has a magnetic sensor or not, whether the terminal has a direction sensor or not, whether the terminal has a gyroscope sensor or not, whether the terminal has a proximity sensor or not, whether the terminal supports a touch screen or not, whether the touch screen of the terminal is a capacitive touch screen or not, the number of touch points of the capacitive touch screen of the terminal and an application program supported by the terminal (for example, whether the terminal has a name card holder file or not, whether the terminal has an information folder or not and whether the terminal has a camera function or not).

Similarly, various kinds of physical operations may also be generated according to the configuration information of the terminal, and for example, may include at least one of: changing intensity of light received by the terminal, changing a movement speed of the terminal, rotating a direction of the terminal, changing a magnitude of a magnetic field around the terminal, changing stability of the terminal, changing a distance away from the terminal, changing the number of points at which the touch screen of the terminal is simultaneously touched and starting a preset application program according to a preset condition. Of course, the physical operation may also be another physical operation, for example, horizontally placing or vertically placing the terminal, and examples will not be listed herein one by one.

The embodiment also provides a CAPTCHA processing method. Fig. 2 is a second flowchart of a CAPTCHA processing method according to an embodiment of the disclosure. As shown in Fig. 2, the method includes the follows:
in block S202: configuration information of a terminal is acquired;
in block S204: a CAPTCHA is generated according to the configuration information, wherein the CAPTCHA indicates one or more physical operations; and
in block S206: verification processing is performed according to the physical operation indicated by the CAPTCHA.

By the abovementioned blocks, a server acquires the configuration information of the terminal at first, then generates the physical operation serving as the CAPTCHA according to the configuration information of the terminal, and executes verification processing on the terminal according to the physical operation; and compared with the related art where a CAPTCHA may be recognized only through a software program to cause high CAPTCHA cracking rate and insecurity, adoption of the physical operation generated according to the configuration information of the terminal as the CAPTCHA may prevent the CAPTCHA from being recognized by any program, so that the problems of high CAPTCHA cracking rate and insecurity in the related art are solved, and effects of prevention of cracking with the program, high security and great improvement in user experiences are further achieved.

When the CAPTCHA is generated according to the configuration information, multiple processing manners may be adopted according to different hardware configured to generate the CAPTCHA, that is, when the configuration information of the terminal is received, hardware configurations the terminal has are determined at first, and processing is performed according to the hardware configurations the terminal has after hardware configurations the terminal does not have are excluded; for example, the hardware configured to generate the CAPTCHA is determined according to the received configuration information at first, there being many manners for determining the hardware, such as adoption of a random function rand for selection of the hardware configured to generate the CAPTCHA; and then the physical operation corresponding to the CAPTCHA is generated according to the selected hardware and a preset algorithm. It is important to note that the preset algorithm may also be the random function rand.

Similarly, the configuration information may include various kinds of information, and may include at least one of: whether the terminal has a light sensor or not, whether the terminal has an acceleration sensor or not, whether the terminal has a magnetic sensor or not, whether the terminal has a direction sensor or not, whether the terminal has a gyroscope sensor or not, whether the terminal has a proximity sensor or not, whether the terminal supports a touch screen or not, whether the touch screen of the terminal is a capacitive touch screen or not, the number of touch points of the capacitive touch screen of the terminal and an application program supported by the terminal (for example, whether the terminal has a name card holder file or not, whether the terminal has an information folder or not and whether the terminal has a camera function or not).

Various kinds of physical operations may also be generated according to the configuration information of the terminal, and for example, may include at least one of: changing intensity of light received by the terminal, changing a movement speed of the terminal, rotating a direction of the terminal, changing a magnitude of a magnetic field around the terminal, changing stability of the terminal, changing a distance away from the terminal, changing the number of points at which the touch screen of the terminal is simultaneously touched and starting a preset application program according to a preset condition. Of course, the physical operation may also be another physical operation, for example, horizontally placing or vertically placing the terminal, and examples will not be listed herein one by one.

The embodiment further provides a CAPTCHA processing device. The device is configured to implement the abovementioned embodiment and a preferred implementation mode, and that what has been described will not be elaborated. For example, the term "component", used below, is a combination of software and/or hardware capable of realizing a preset function. The device described in the following embodiment is preferably implemented by software, but implementation of the device with hardware or the combination of software and hardware is also possible and conceived.

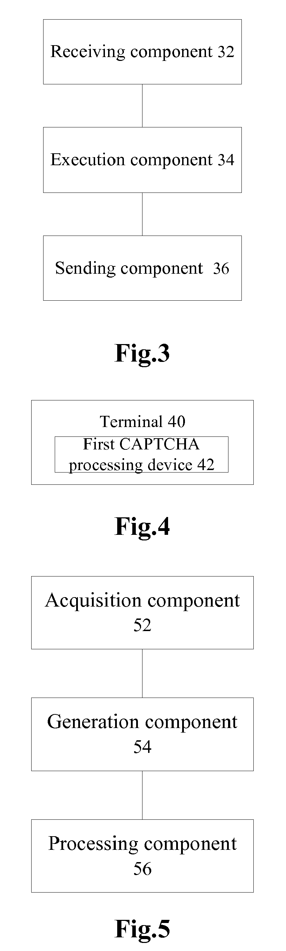

Fig. 3 is a structure diagram of a first CAPTCHA processing device according to an embodiment of the disclosure. As shown in Fig. 3, the device includes a receiving component 32, an execution component 34 and a sending component 36. The device will be described below.

The receiving component 32 is configured to receive a CAPTCHA, wherein the CAPTCHA is a physical operation generated according to configuration information of a terminal; the execution component 34 is connected to the receiving component 32, and is configured to execute the physical operation corresponding to the CAPTCHA; and the sending component 36 is connected to the execution component 34, and is configured to send an execution result of the physical operation to a server.

Fig. 4 is a structure diagram of a terminal according to an embodiment of the disclosure. As shown in Fig. 4, the terminal 40 includes the first CAPTCHA processing device 42.

The embodiment of the disclosure further provides a CAPTCHA processing device. Fig. 5 is a structure diagram of a second CAPTCHA processing device according to an embodiment of the disclosure. As shown in Fig. 5, the device includes an acquisition component 52, a generation component 54 and a processing component 56. The device will be described below.

The acquisition component 52 is configured to acquire configuration information of a terminal; the generation component 54 is connected to the acquisition component 52, and is configured to generate a CAPTCHA according to the configuration information, wherein the CAPTCHA indicates one or more physical operations; and the processing component 56 is connected to the generation component 54, and is configured to perform verification processing according to the physical operation of the CAPTCHA.

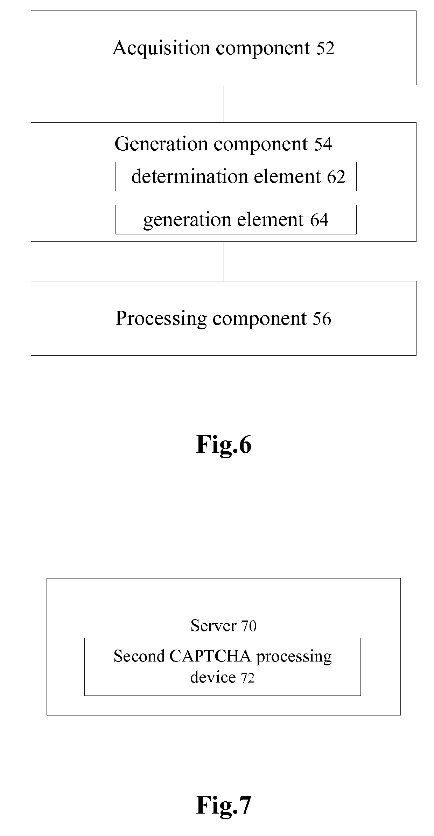

Fig. 6 is a preferred structure diagram of a generation component 54 in a second CAPTCHA processing device according to an embodiment of the disclosure. As shown in Fig. 6, the generation component 54 includes a determination element 62 and a generation element 64. The generation component 54 will be described below.

The determination element 62 is configured to determine hardware configured to generate the CAPTCHA according to the configuration information; and the generation element 64 is connected to the determination element 62, and is configured to generate the physical operation corresponding to the CAPTCHA according to the determined hardware and a preset algorithm.

Fig. 7 is a structure diagram of a server according to an embodiment of the disclosure. As shown in Fig. 7, the server 70 includes the second CAPTCHA processing device 72 described in any item.

In various CAPTCHA systems in the related art, attacking means adopted by hackers is based on programs, and dictionary attacks and exhaustion are both implemented by software operations. The embodiment provides a new CAPTCHA which implements the verification by physical operation detected by a terminal (such as a mobile phone). The new CAPTCHA may not be recognized and operated with a program, is generated by a manual physical operation of a user, and may not be operated and cracked by virtue of software even though a hacker program has recognized a content required by the CAPTCHA. It is important to note that the method may be adopted for various terminals on which physical operations may be conveniently executed, examples will not be listed herein one by one, and description is made below with a mobile phone as an example.

The abovementioned physical operation verification method is applied to a CAPTCHA system of a mobile phone, and a touch screen and other sensor devices of the mobile phone are fully utilized for design. The following main parts are involved: a server and a terminal. The parts involved in the CAPTCHA system are described below.

The server is a CAPTCHA generation device, acquires configuration information of a terminal used by a user, randomly selects and generates a CAPTCHA and notifies the CAPTCHA to the user in a specific manner. Such a specific manner includes, but not limited to: directly notifying the user through Chinese and English characters, notifying the user how to operate by displaying a GIF picture, notifying the user by embedding characters in a picture and the like and notifying the user by virtue of video play and the like.

The terminal feeds back configuration information required by a server, displays a CAPTCHA manner provided by the server, acquires and monitors a physical operation of the user in background and notifies a monitored result to the server. In addition, the terminal is also required to detect a correct physical operation executed on the mobile phone by the terminal user according to a method prompted on the terminal, and the physical operation includes, but not limited to, horizontally or vertically placing flat the mobile phone, overturning the mobile phone by 360 degrees, blocking a light or proximity sensor of the mobile phone with a hand for N times, starting and clicking a specific program according to a requirement, and the like.

Based on the abovementioned server and terminal, the following manner is mainly adopted for the CAPTCHA method for performing physical operation verification on the terminal: when the user needs to log in a certain system or a certain client on a mobile terminal, the system may return a CAPTCHA to the user to determine that it is not a certain robot program continuously trying a password in background but the user using the mobile terminal. Before the system returns the CAPTCHA, the system sends a request at first to request the client to provide related configuration information of the terminal (which may specifically be one or more of the following information, or other which is not listed here): sensors the mobile phone has: whether the mobile phone has acceleration, magnetic, direction, gyroscope, proximity and light sensors or not; information about a touch screen of the mobile phone: whether the touch screen is a capacitive screen or not and the number of touch points if the touch screen is a capacitive screen; and general application programs the mobile phone has: such as a browser, a camera, a name card holder and a short message.

After acquiring the configuration information, the terminal sends the configuration information to the server according to a defined signalling format (the format may be freely defined).

After acquiring the configuration information, the server starts a judgment algorithm, may provide the CAPTCHA according to the judgment algorithm, and sends the CAPTCHA to the user. For example, the judgment algorithm may be a corresponding relationship table. As shown in Table 1, Table 1 is the corresponding relationship table of the CAPTCHA judgment algorithm according to the embodiment of the disclosure.

| Sequence number | Sensor | Characteristic | CAPTCHA method |
|---|---|---|---|
| 1 | Light | Strong or weak | Randomly providing a CAPTCHA indicating strong or weak light through a random function rand |
| 2 | Proximity | Near or far | Randomly providing a CAPTCHA indicating a short or long distance through a random function rand, wherein random time may be provided (the time is between 0 and 5 seconds) |
| 3 | Gyroscope | Inertia or procession | Providing a stability parameter and direction parameter of the terminal through a function rand |
| 4 | Direction | East, south, west and north | Randomly providing a CAPTCHA indicating a direction of the mobile phone through a function rand |
| 5 | Magnetic | Magnetic field intensity | Providing a magnitude of intensity of a magnetic field around the terminal through a function rand |
| 6 | Acceleration | Horizontal or vertical | Randomly providing horizontal or vertical placement of the mobile phone through a function rand |
| 7 | Touch screen | 3, 4, 5, 6, 7 or | Randomly providing the number of |
| | | more touch points | points which are simultaneously touched through a function rand, a maximum value not exceeding a maximum value of a screen |
| 8 | Program | Name card folder, camera | Randomly providing a CAPTCHA indicating a running program through a function rand |

It is important to note that corresponding relationships in the table may be listed independently, and may also be listed through different combinations. After the CAPTCHA to be provided for the terminal user is obtained, the CAPTCHA is sent to the terminal user for the terminal user to operate. Specifically, the CAPTCHA may be sent through pure characters, and may also be sent through a picture to which characters are attached. Under the condition that the CAPTCHA is sent through the picture, a GIF picture may also be randomly generated according to the CAPTCHA and is sent.

After receiving the CAPTCHA, the user starts a physical operation according to a requirement indicated by the CAPTCHA. At the same time, a background program monitors the physical operation indicated by the CAPTCHA in background. (Different from a conventional CAPTCHA, a start button may be provided when the user moves a cursor to an input box, the user clicks start button for operation, and the operation has been finished when the user clicks stop button.)

At this time, a background recording program may record an operation result of the user and send it to the server. The server judges whether the physical operation is correct or not. Under the condition that the physical operation is not correct, the terminal user may refresh the CAPTCHA, and the server may retransmit a set of CAPTCHA to the user for operation.

A preferred implementation mode of the disclosure is described below with reference to the drawings.

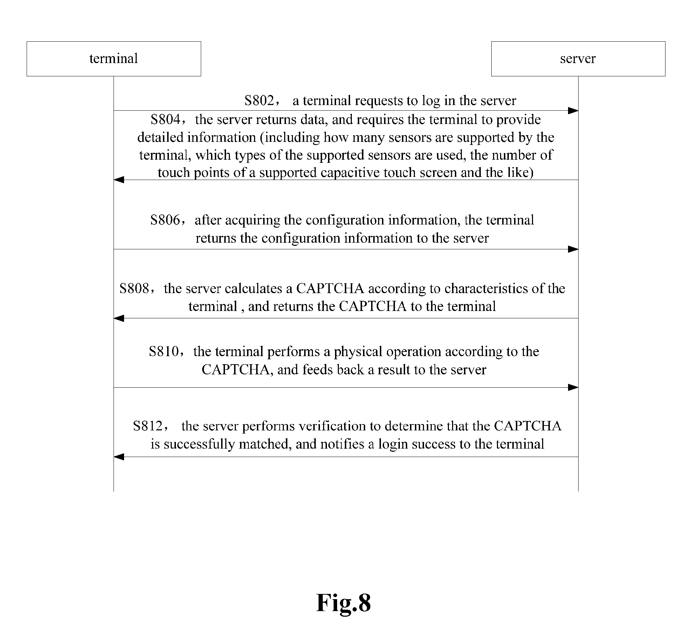

Fig. 8 is a flowchart of CAPTCHA processing implemented by a physical operation according to a first preferred embodiment of the disclosure. As shown in Fig. 8, the method includes the following blocks:
in block S802: a terminal requests to log in a server, wherein the mobile terminal, for example, is a mobile phone;
in block S804: the server returns a request, and requires the terminal to provide configuration information (including how many sensors are supported by the terminal, which types of the supported sensors respectively are, the number of touch points of a supported capacitive touch screen and the like);
in block S806: after receiving the request, the terminal acquires configuration information, and returns the configuration information to the server;
in block S808: the server calculates a CAPTCHA according to characteristics of the terminal which are contained in the configuration information, and returns the CAPTCHA to the terminal;
in block S810: the terminal performs a physical operation according to the CAPTCHA, and feeds back a result to the server; and
in block S812: the server performs verification to determine that the CAPTCHA is successfully matched, and notifies a login success to the terminal.

Description is made below on the basis of the abovementioned processing flow with implementation of processing of the CAPTCHA through a physical operation of the direction sensor and implementation of processing of the CAPTCHA through a physical operation of the proximity sensor respectively.

Preferred embodiment 2 (a flow of implementing processing of a CAPTCHA through a physical operation of a direction sensor, the flow including the following blocks)
In block S902: a user starts a login program to prepare for login, and waits for a CAPTCHA provided by a server.

In block S904: the server may request for configuration information of a terminal through a Hypertext Transfer Protocol Secure (HTTPS) encrypted message, wherein the HTTPS encrypted message of the request may include the following contents:
<sensor: light=?; proximity=?; gyroscope=?; direction=?; magnetic=?; acceleration=?>
<touch screen: maximum simultaneous touch number=?>
<program: name card holder=?; information=?; Camera=?>

In block S906: after receiving the HTTPS encrypted message, the terminal acquires the configuration information, and returns the configuration information to the server, wherein 0 (NO) or 1 (YES) is filled in the question marks according to a practical condition, and the number of touch points is filled in the question mark of the touch screen; then the configuration information is returned to the server in an HTTPS encryption manner.

In block S908: the server calculates a CAPTCHA according to characteristics of the terminal which are contained in the configuration information, and returns the CAPTCHA to the terminal, wherein specific processing may include the follows:
A) after the configuration information is received, the server excludes hardware configurations the terminal does not have, and processes hardware configurations the terminal has according to a specific rule; there existing multiple rules and here one being described: the server determines that a CAPTCHA, which implement verification by characteristics of hardware, is required to be adopted through a random function rand; a value of the function rand is usually a random number between 0 and 1, the value of the function rand is multiplied by 10, a result is rounded to obtain a number between 1 and 10, and then selects a certain sensor according to the number, for example, the server finally selects a direction sensor;
B) the server queries an algorithm table to learn about that the direction sensor totally has four values east, south, west north through Table 1, wherein the four values may be combined into different CAPTCHAs, and generally speaking, the number of bits of the CAPTCHA does not exceed 4 for facilitating operation of the user;
C) the algorithm table is queried, according to Table 1, to learn about that a direction of the direction sensor which is also acquired through a rand value, wherein the function rand is multiplied by 10, a result is rounded, a rounding result is divided by 4 to obtain a remainder, the remainder which is 0-3 is the number of the bits of the CAPTCHA to be provided; if the server obtains 3, the CAPTCHA with 3+1=4 bits is provided;
D) similarly, the function rand is multiplied by 10, a result is rounded, a rounding result is divided by 4 to obtain a remainder to obtain a direction of the first bit of the CAPTCHA, 0-3 representing directions east, west, south and north respectively, and if the server obtains 0, the first bit of the CAPTCHA is east; the above steps A-D are repeated to obtain the four bits of the CAPTCHA, i.e. east, east, north and south;
E) the four characters east, east, north and south are loaded into a BMP picture, then a BMP picture is sent to the user through HTTPS, the user clicks an input box of the CAPTCHA after receiving the CAPTCHA, a start button pops up, and the user clicks the start button, and places the mobile phone flat for direction operation;

In block S910: the user turns a direction of the head of the mobile phone to east, and then presses a confirmation button, the background detection program may call a standard direction sensor function to acquire a direction of a current sensor, and records the acquired direction in the input box for the user to see, and the user may see the recorded direction, delete the input direction, and performs a physical operation again.

The user repeats the above operation until the four directions are acquired, then the east, east, north and south are displayed in the input box, which indicates that the CAPTCHA is completely input, and then the user may click to send the CAPTCHA to the server.

In block S912: the server receives a CAPTCHA instruction sent through HTTPS in an encryption manner, compares the received CAPTCHA instruction with an originally stored CAPTCHA instruction, and allows the user to log in the server if comparison succeeds.

Preferred embodiment 3 (a flow of implementing processing of a CAPTCHA through a physical operation of a proximity sensor, the flow including the following blocks)
In block S1002: a user starts a login program to prepare for login, and waits for a CAPTCHA provided by a server;
In block S1004: the server may request for configuration information of a terminal through an HTTPS encrypted message, wherein the HTTPS encrypted message is as follows:
   <sensor: light=?; proximity=?; gyroscope=?; direction=?; magnetic=?; acceleration=?>
   <touch screen: maximum simultaneous touch number=?>
   <program: name card holder=?; information=?; Camera=?>
In block S1006: after receiving the HTTPS encrypted message, the terminal acquires the configuration information, and returns the configuration information to the server, wherein 0 (NO) or 1 (YES) is filled in the question marks according to a practical condition, and the number of touch points is filled in the question mark of the touch screen; then the configuration information is returned to the server in an HTTPS encryption manner;
In block S1008: the server calculates a CAPTCHA according to characteristics of the terminal which are contained in the configuration information, and returns the CAPTCHA to the terminal, wherein specific processing may include the follows:
   A) after the configuration information is received, the server excludes hardware configurations the terminal does not have, and processes hardware configurations the terminal has according to a specific rule; there existing multiple rules and here one being described: the server determines that a CAPTCHA, which implement verification by characteristics of hardware, is required to be adopted through a random function rand; a value of the function rand is usually a random number between 0 and 1, the value of the function rand is multiplied by 10, a result is rounded to obtain a number between 1 and 10, and then selects a certain sensor according to the number; for example, the server finally selects a proximity sensor;
   B) the server queries an algorithm table to learn about that the proximity sensor totally has two values near and far through Table 1, wherein the two values may be combined with a necessary time random parameter into different CAPTCHAs, and generally speaking, the number of bits of the CAPTCHA does not exceed 4 for facilitating operation of the user;
   C) the algorithm table is queried, according to Table 1, to learn about that a value of the proximity sensor which is acquired through the rand value; a random function rand is called of which a value is from 0 to 1; if the value of the function rand is less than 0.5, it indicates near, and it indicates far if the value of the function rand is more than 0.5 and less than 1;
   D) a value in the first bit of the CAPTCHA is calculated, the function rand is called, and if the value of the function rand is less than 0.5, it indicates near; the function rand is ,multiplied by 10, a result is divided by 2 to obtain a remainder, it is indicated that time is short (0.5 seconds) if the remainder is 0, it is indicated that time is long (2 seconds) if the remainder is 1, and if the remainder is 1, it is indicated that the user is required to keep the value of the proximity sensor being near for 2 seconds; the above steps are repeated to obtain the second bit to the fourth bit of the CAPTCHA;
   E) values in four bits of the CAPTCHA which are near (2 seconds), far (0.5 second), near (0.5 second) and far (0.5 second) are finally obtained, the CAPTCHA is loaded into a BMP picture, then the BMP picture is sent to the user through HTTPS; the user clicks an input box of the CAPTCHA after receiving the CAPTCHA, a start button pops up, and the user clicks the start button, and blocks the proximity sensor on the uppermost part of the mobile phone for operation with a hand; it indicates near when the proximity sensor is blocked by the hand of the user, and it indicates far when the hand of the user is far away the proximity sensor.
In block S1010: the user executes the following operation according to the CAPTCHA: pressing the window of the proximity sensor for 2 seconds with the hand, then releasing the window of the proximity sensor for 0.5 second, pressing the window of the proximity sensor again for 0.5 second and releasing the window of the proximity sensor again for 0.5 second; and then the user clicks an end button, near, far, near and far may appear in the input box of the CAPTCHA, which indicates that the CAPTCHA has been input, and then the user may send the CAPTCHA to the server.
In block S1012: the server receives a CAPTCHA instruction sent through HTTPS in an encryption manner, compares the received CAPTCHA instruction with an originally stored CAPTCHA instruction, and allows the user to log in if comparison succeeds.

Obviously, those skilled in the art should know that each component or block of the embodiment of the disclosure can be implemented by a universal computing device, and the components or steps can be concentrated on a single computing device or distributed on a network formed by a plurality of computing devices, and can optionally be implemented by programmable codes executable for the computing devices, so that the components or steps can be stored in a storage device for execution with the computing devices, or and under certain conditions, the shown or described steps can be executed in a sequence different from that described here, or the components or steps can form each integrated circuit component respectively, or multiple components or steps therein can form a single integrated circuit component for implementation. As a consequence, the disclosure is not limited to any specific hardware and software combination.

The above is only the preferred embodiment of the disclosure and not intended to limit the disclosure, and for those skilled in the art, the disclosure may have various modifications and variations. Any modifications, equivalent replacements, improvements and the like within the spirit and principle of the disclosure shall fall within the scope of protection of the disclosure.

## Claims

1. A Completely Automated Public Turing test to tell Computers and Humans Apart (CAPTCHA) processing method, **characterized by** comprising:
receiving a CAPTCHA, wherein the CAPTCHA indicates a physical operation generated according to configuration information of a terminal;
executing the physical operation corresponding to the CAPTCHA; and
sending an execution result of the physical operation to a server.

2. The method according to claim 1, **characterized in that** the configuration information comprises at least one of:
whether the terminal has a light sensor or not, whether the terminal has an acceleration sensor or not, whether the terminal has a magnetic sensor or not, whether the terminal has a direction sensor or not, whether the terminal has a gyroscope sensor or not, whether the terminal has a proximity sensor or not, whether the terminal supports a touch screen or not, whether the touch screen of the terminal is a capacitive touch screen or not, the number of touch points of the capacitive touch screen of the terminal and an application program supported by the terminal.

3. The method according to claim 1, **characterized in that** the physical operation comprises at least one of:
changing intensity of light received by the terminal, changing a movement speed of the terminal, rotating a direction of the terminal, changing a magnitude of a magnetic field around the terminal, changing stability of the terminal, changing a distance away from the terminal, changing the number of points at which the touch screen of the terminal is simultaneously touched and starting a preset application program according to a preset condition.

4. A Completely Automated Public Turing test to tell Computers and Humans Apart (CAPTCHA) processing method, **characterized by** comprising:
acquiring configuration information of a terminal;
generating a CAPTCHA according to the configuration information, wherein the CAPTCHA indicates one or more physical operations; and
performing verification processing according to the physical operation of the CAPTCHA.

5. The method according to claim 4, **characterized in that** generating the CAPTCHA according to the configuration information comprises:
determining, according to the configuration information, hardware configured to generate the CAPTCHA; and
generating the physical operation corresponding to the CAPTCHA according to the determined hardware and a preset algorithm.

6. The method according to claim 4 or 5, **characterized in that** the configuration information comprises at least one of:
whether the terminal has a light sensor or not, whether the terminal has an acceleration sensor or not, whether the terminal has a magnetic sensor or not, whether the terminal has a direction sensor or not, whether the terminal has a gyroscope sensor or not, whether the terminal has a proximity sensor or not, whether the terminal supports a touch screen or not, whether the touch screen of the terminal is a capacitive touch screen or not, the number of touch points of the capacitive touch screen of the terminal and an application program supported by the terminal.

7. The method according to claim 4 or 5, **characterized in that** the physical operation comprises at least one of:
changing intensity of light received by the terminal, changing a movement speed of the terminal, rotating a direction of the terminal, changing a magnitude of a magnetic field around the terminal, changing stability of the terminal, changing a distance away from the terminal, changing the number of points at which the touch screen of the terminal is simultaneously touched and starting a preset application program according to a preset condition.

8. A Completely Automated Public Turing test to tell Computers and Humans Apart (CAPTCHA) processing device, **characterized by** comprising:
a receiving component, configured to receive a CAPTCHA, wherein the CAPTCHA indicates a physical operation generated according to configuration information of a terminal;
an execution component, configured to execute the physical operation corresponding to the CAPTCHA; and
a sending component, configured to send an execution result of the physical operation to a server.

9. A terminal, **characterized by** comprising the device according to claim 8.

10. A Completely Automated Public Turing test to tell Computers and Humans Apart (CAPTCHA) processing device, **characterized by** comprising:
an acquisition component configured to acquire configuration information of a terminal;
a generation component configured to generate a CAPTCHA according to the configuration information, wherein the CAPTCHA indicates one or more physical operations; and
a processing component configured to perform verification processing according to the physical operation of the CAPTCHA.

11. The device according to claim 10, **characterized in that** the generation component comprises:
a determination element configured to determine, according to the configuration information, hardware configured to generate the CAPTCHA; and
a generation element configured to generate the physical operation corresponding to the CAPTCHA according to the determined hardware and a preset algorithm.

12. A server, **characterized by** comprising the device according to any one of claims 10 to 11.
